# EUROPEAN PATENT APPLICATION

(11) **EP 4 811 765 A1**
(43) Date of publication of application: **23.09.2026**
(21) Application number: 26164605.3
(22) Date of filing: 13.03.2026
(51) Int. Cl.: H04N 7/18

(54) **VIDEO PROVISION SYSTEM, VIDEO PROVISION METHOD, AND NON-TRANSITORY COMPUTER READABLE STORAGE MEDIUM**

(30) Priority: 17.03.2025 JP 2025042679
(71) Applicant: amnimo Inc., Musashino-shi, Tokyo 180-8750 (JP)
(72) Inventor: Kojima, Osamu, Musashino-shi, Tokyo 180-8750 (JP); Wada, Atsushi, Musashino-shi, Tokyo 180-8750 (JP)
(74) Representative: Grünecker Patent- und Rechtsanwälte PartG mbB

(57) **Abstract**

A video provision system includes a camera device configured to capture a video, and a video provision device configured to provide the video captured by the camera device to an external device. The camera device is configured to encrypt and store the captured video using a key provided by the video provision device, and transmit the stored video to the video provision device when the camera device is communicatively connected to the video provision device. The video provision device is configured to decode the video transmitted from the camera device and provide the decoded video to the external device.

## Description

### BACKGROUND

### Technical Fields

The present disclosure relates to a video provision system, a video provision method, and a non-transitory computer readable storage medium. Priority is claimed on Japanese Patent Application No. 2025-042679, filed on March 17, 2025, the contents of which are incorporated herein by reference.

### Description of Related Art

In recent years, video provision systems that provide users with videos captured by surveillance cameras or portable cameras have been frequently used. Such video provision systems are used, for example, to monitor equipment or facilities, monitor crowds in urban areas, and provide security. An example of the video provision system is disclosed in "Enhanced Video Management System", [online], [Retrieved March 10, 2025], Internet <URL: https://amnimo.com/en/service/e_vms/>.

In recent years, portable cameras known as wearable cameras or body-worn cameras (BWCs) have been gaining attention. Wearable cameras are cameras attached to a body, clothing, a hat, and the like to be used, and has features such as being small, light weight, and enabling hands-free capturing. Such wearable cameras are being considered for use in supporting work of, for example, security guards who make patrols, inspectors who perform patrol inspections, and police officers.

However, portable cameras, such as wearable cameras, may be lost or stolen. If a portable camera is lost or stolen and falls into the hands of a third party, a video recorded on the portable camera may be viewed by the third party. For example, a portable camera used by a security guard who makes a patrol may capture a video of highly confidential areas that are off-limits to a third party other than the security guard and relevant personnel, and viewing the video itself may cause a security risk.

This disclosure has been made in light of the circumstances described above, and aims to provide a video provision system, a video provision method, and a program that can avoid a risk of a recorded video being viewed by a third party even if the camera device is lost or stolen.

### SUMMARY

To solve the problems described above, a video provision system (1) according to one aspect of the present disclosure includes a camera device (10) configured to capture a video and a video provision device (20) configured to provide the video captured by the camera device to an external device, in which the camera device encrypts and stores the captured video using a key (K) provided by the video provision device, and when communicatively connected to the video provision device, the camera device transmits the stored video to the video provision device, and the video provision device decodes the video transmitted from the camera device and provides the decoded video to the external device.

In addition, according to a second aspect of the present disclosure, in the video provision system according to the first aspect of the present disclosure, the video provision device may generate a first key (K) used to encrypt video and a second key used to decode the video, provide the first key to the camera device as the key, and decode the video transmitted from the camera device using the second key.

In addition, according to a third aspect of the present disclosure, in the video provision system according to the first or second aspect of the present disclosure, the video provision device may provide the key together with an identifier (ID) identifying the key to the camera device.

In addition, according to a fourth aspect of the present disclosure, in the video provision system according to the third aspect of the present disclosure, the camera device may transmit the identifier for identifying the key used to encrypt video to the video provision device together with the encrypted video.

In addition, according to a fifth aspect of the present disclosure, in the video provision system according to the fourth aspect of the present disclosure, the video provision device may decode the video transmitted from the camera device using the key identified by the identifier transmitted together with the video.

In addition, according to a sixth aspect of the present disclosure, in the video provision system according to one of the first to fifth aspects of the present disclosure, the camera device may request the video provision device to generate the key prior to capturing a video.

In addition, according to a seventh aspect of the present disclosure, in the video provision system according to one of the first to sixth aspects of the present disclosure, the camera device may periodically request the video provision device to generate the key.

In addition, according to an eighth aspect of the present disclosure, in the video provision system according to one of the first to seventh aspects of the present disclosure, after the stored video is transmitted to the video provision device, the camera device may delete the video transmitted to the video provision device when the video provision device notifies the camera device that reception of the video has been completed or that an instruction to delete the video has been received.

In addition, according to a ninth aspect of the present disclosure, in the video provision system according to one of the first to eighth aspects of the present disclosure, the camera device may include a camera (12) that captures a video, a communication device (11) that communicates with the video provision device, and a processor (18) connected to the camera and the communication device, and the processor may encrypt the captured video using a key provided by the video provision device in accordance with a predetermined program (P).

In addition, according to a tenth aspect of the present disclosure, in the video provision system according to one of the first to ninth aspects of the present disclosure, the video provision device may perform authentication on the camera device when the key is provided to the camera device, and provide the key to the camera device when the authentication is successful.

In addition, according to a eleventh aspect of the present disclosure, in the video provision system according to one of the first to tenth aspects of the present disclosure, the video provision device may include a memory storing a program, and a processor configured to realize functions of the video provision device by executing the program.

A video provision method according to another aspect of the present disclosure is a video provision method in a video provision system (1) including a camera device (10) that captures a video and a video provision device (20) that provides the video captured by the camera device to an external device, and includes encrypting and storing, by the camera device, the captured video using a key (K) provided by the video provision device, and transmitting the stored video to the video provision device when the camera device is communicatively connected to the video provision device, and decoding, by the video provision device, the video transmitted from the camera device and providing the decoded video to the external device.

According to still another aspect of the present disclosure, a non-transitory computer readable storage medium that stores a program that causes a computer (18) connected to a camera (12) that captures a video and a communication device (11) that communicates with an external device (20) to execute encrypting and storing video captured by the camera using a key (K) provided by the external device, and controlling the communication device so that the stored video is transmitted to the external device when communicatively connected to the external device.

The present disclosure has an advantage of avoiding a risk of a recorded video being viewed by a third party even if the camera device is lost or stolen.

Further features and aspects of the present disclosure will become apparent from the following detailed description of exemplary embodiments with reference to the attached drawings.

### BRIEF DESCRIPTION OF THE DRAWINGS

FIG. 1 is a diagram which shows an overall configuration of a video provision system according to one embodiment of the present disclosure.
FIG. 2 is a diagram which shows a hardware configuration of a camera device according to one embodiment of the present disclosure.
FIG. 3 is a timing chart which shows an example of an operation of the video provision system according to one embodiment of the present disclosure.
FIG. 4 is a timing chart which shows another example of the operation of the video provision system according to one embodiment of the present disclosure.

### DETAILED DESCRIPTION OF THE EMBODIMENTS

A video provision system, a video provision method, and a non-transitory computer readable storage medium according to embodiments of the present disclosure will be described in detail below with reference to the drawings.

### <Video provision system>

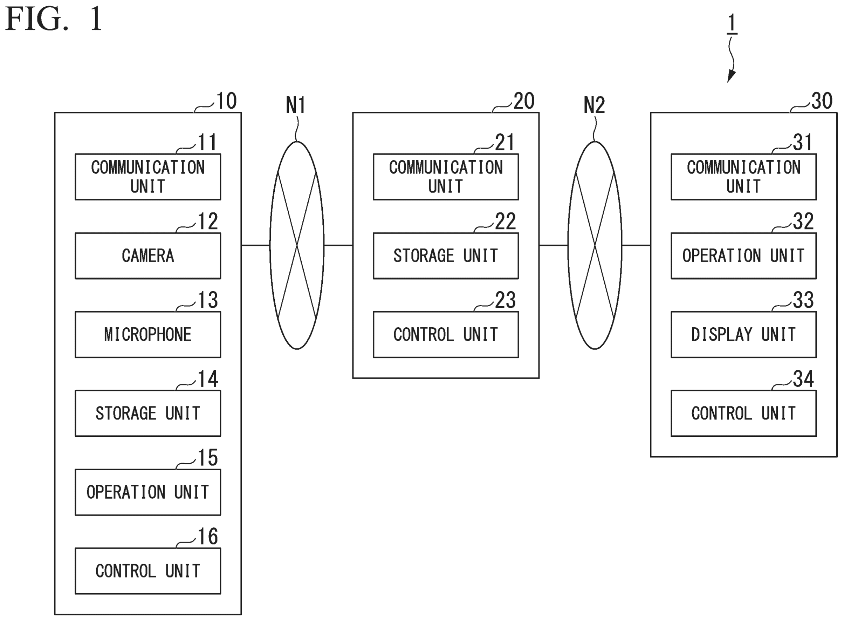

FIG. 1 is a diagram which shows an overall configuration of a video provision system according to one embodiment of the present disclosure. As shown in FIG. 1, a video provision system 1 includes a camera device 10, a video provision device 20, and a terminal device 30. The camera device 10 and the video provision device 20 are communicatively connected via a network N1. The video provision device 20 and the terminal device 30 are communicatively connected via a network N2.

The network N1 is, for example, a mobile communication network provided by a mobile network operator (MNO). The network N2 is a WAN such as the Internet. Note that the network N1 may include a network for wired communication in addition to a network for wireless communication. The network N2 may be a network capable of wired communication, a network capable of wireless communication, or a network capable of both wired and wireless communication.

### <Camera device>

The camera device 10 is, for example, a portable camera, also known as a wearable camera or body-worn camera (BWC). The camera device 10 is worn by a user, such as a security guard, and used. Although only one camera device 10 is shown in FIG. 1, any number of camera devices 10 may be used.

As shown in FIG. 1, the camera device 10 includes a communication unit 11 (communication device), a camera 12, a microphone 13, a storage unit 14, an operation unit 15, and a control unit 16. The communication unit 11 performs communication via the network N1 under control of the control unit 16. For example, the communication unit 11 communicates with a video provision device 20 (external device) via the network N1. Note that the communication unit 11 can also communicate with the video provision device 20 via a communication line other than the network N1 (for example, the Internet).

The camera 12 is equipped with an imaging element such as a charge coupled device (CCD) sensor or a complementary metal oxide semiconductor (CMOS) sensor, and captures a video under the control of the control unit 16. The camera 12 converts the captured video into a digital video signal and outputs it. The microphone 13 is equipped with, for example, an omnidirectional, highly sensitive sound-collecting microphone, and captures ambient sounds or vocal sounds under the control of the control unit 16. The microphone 13 converts the captured ambient sounds into a digital vocal sound signal and outputs it.

The storage unit 14 stores the digital video signal output from the camera 12 and the digital vocal sound signal output from the microphone 13. The storage unit 14 may store the digital video signal and digital vocal sound signal in a file format. For example, the storage unit 14 may have a slot into which a memory card (storage medium) can be inserted or removed, and store, under the control of the control unit 16, the digital video signal and digital vocal sound signal in file format on the memory card inserted into the slot.

The digital video signal and digital vocal sound signal stored in the storage unit 14 are encrypted by the control unit 16. This is to avoid a risk of a recorded video being viewed by a third party even if the camera device 10 is lost or stolen. Hereinafter, the file in which the digital video signal and digital vocal sound signal stored in the storage unit 14 are stored will be referred to as a "video file F."

The operation unit 15 outputs instructions (instructions for the camera device 10) to the control unit 16 in response to operations by a user using the camera device 10. The camera device 10 may also be equipped with a small display device such as a liquid crystal display device. Alternatively, the camera device 10 may be equipped with a touch-panel liquid crystal display device that combines a display function and an operation function as the operation unit 15.

The control unit 16 comprehensively controls an operation of the camera device 10. For example, the control unit 16 encrypts the digital video signal output from the camera 12 and the digital vocal sound signal output from the microphone 13 using an encryption key K (key) provided by the video provision device 20, and stores (saves) it in the storage unit 14.

In addition, when a predetermined condition is met, the control unit 16 controls the communication unit 11 to transmit the video file F stored in the storage unit 14 to the video provision device 20. Examples of the predetermined condition described above include the communication unit 11 being communicatively connected to the video provision device 20 via a fixed internet line via Wi-Fi (registered trademark), a user of the camera device 10 instructing transmission, and the like. When this condition is met, the video file F is transmitted to the video provision device 20 via the fixed internet line, rather than via the network N1 shown in FIG. 1. By doing this, it is possible to reduce an amount of communication via the network N1.

Moreover, when the control unit 16 transmits the video file F stored in the storage unit 14 to the video provision device 20, it also transmits an identifier (hereinafter referred to as a "key identifier ID") that identifies the encryption key K used to encrypt this video file F to the video provision device 20 together with the video file F. A reason for doing this is to inform the video provision device 20 of which encryption key K is used to encrypt the video file F transmitted to the video provision device 20.

The control unit 16 may transmit the video file F and the key identifier ID separately or together. For example, the control unit 16 may transmit a video file F with the key identifier ID stored in the header. This key identifier ID is, for example, stored in the header of the video file F when the control unit 16 stores the video file F in the storage unit 14.

Moreover, after the video file F stored in the storage unit 14 is transmitted to the video provision device 20, when the control unit 16 receives a specified notification from the video provision device 20, it deletes the transmitted video file F from the storage unit 14. This is because the video file F transmitted to video provision device 20 does not need to be stored in the camera device 10, and deleting an unnecessary video file F reduces a risk of other people viewing the video and also ensures capacity in the storage unit 14. Examples of the specified notification include a notification indicating completion of reception of a video file F or a notification instructing deletion of the video file F.

In addition, prior to capturing a video, the control unit 16 requests the video provision device 20 to generate an encryption key K. This is because the encryption key K is required for encrypting a video captured by the camera 12. The encryption key K may be requested at any time before the camera 12 captures the video. For example, the control unit 16 may make a request at a timing when the camera device 10 is registered with the video provision device 20 as a camera device to be used in the video provision system 1. Alternatively, the control unit 16 may make a request at a timing when the camera device 10 is powered on after the registration.

In addition, the control unit 16 may periodically request the video provision device 20 to generate an encryption key K. This is to enhance security by periodically updating the encryption key K. For example, the control unit 16 may request the generation of the encryption key K once a week or once a month. A period for requesting the generation of the encryption key K is arbitrary.

Moreover, when the operation unit 15 makes a video transmission instruction, the control unit 16 may transmit the video captured by the camera 12 via the network N1. In this case, the control unit 16 may encrypt and store the video captured by the camera 12 in the storage unit 14 while transmitting it. Alternatively, the control unit 16 may only transmit the video captured by the camera 12 without storing it in the storage unit 14. The control unit 16 may transmit the video captured by the camera 12 as a moving image, or may generate still images from the video captured by the camera 12 and periodically transmit the still images.

Moreover, the control unit 16 performs power-saving control as necessary. For example, when video is not being captured by the camera 12, the control unit 16 suppresses unnecessary power consumption by stopping at least one of the communication unit 11 and the camera 12. In addition to the communication unit 11 and the camera 12, the control unit 16 may also stop the microphone 13, the storage unit 14, and the operation unit 15. The control unit 16 may also switch its operation mode from a normal operation mode to a low-power consumption mode to suppress its own power consumption.

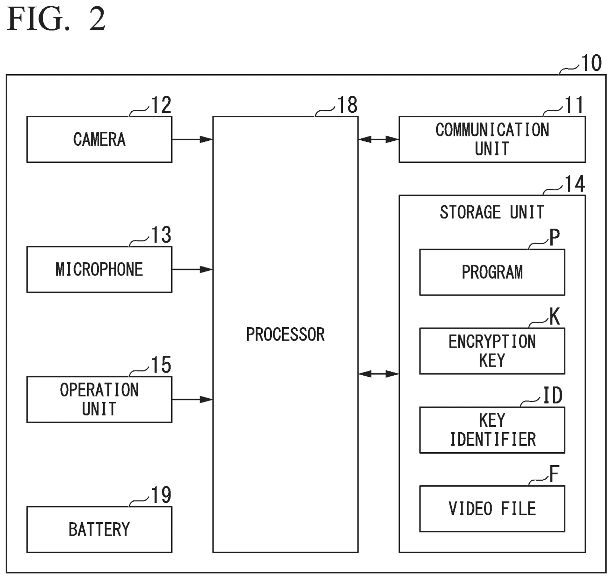

FIG. 2 is a diagram which shows a hardware configuration of a camera device according to one embodiment of the present disclosure. Note that in FIG. 2, constituents corresponding to those shown in FIG. 1 are assigned the same reference numerals. As shown in FIG. 2, the camera device 10 includes a processor 18 (computer) and a battery 19 in addition to the communication unit 11, the camera 12, the microphone 13, the storage unit 14, and the operation unit 15.

The processor 18 is, for example, a central processing unit (CPU) or a microprocessor unit (MPU). The communication unit 11, the camera 12, the microphone 13, the storage unit 14, and the operation unit 15 are connected to the processor 18. Functions of the control unit 16 shown in FIG. 1 are realized by the processor 18 executing a program P (a predefined program) that implements these functions. In other words, the functions of the control unit 16 are realized through collaboration of software and hardware resources. By realizing the functions of the control unit 16 through collaboration of software and hardware resources, it is extremely easy to update, delete, or add functions, for example.

Note that, although it is desirable to realize the functions of the control unit 16 through the collaboration of software and hardware resources, the functions are not precluded from being realized using dedicated hardware. The functions of the control unit 16 may be realized using hardware such as a field-programmable gate array (FPGA), large-scale integration (LSI), or an application-specific integrated circuit (ASIC).

The battery 19 supplies power for operating the camera device 10. Specifically, the battery 19 supplies power to the communication unit 11, the camera 12, the microphone 13, the storage unit 14, the operation unit 15, and the processor 18. The battery 19 may be a primary battery or a secondary battery. Alternatively, the battery 19 may include a fuel cell, a capacitor, or a power generation circuit that performs environmental power generation (so-called energy harvesting from a solar cell, or the like).

The storage unit 14 stores a program P, an encryption key K, a key identifier ID, a video file F, and the like. The program P is a program that realizes the functions of the control unit 16 shown in FIG. 1. This program P may be provided in a form of being installed in the camera device 10 in advance, or may be distributed via a network such as the Internet, or may be distributed in a state of being recorded on a computer-readable recording medium such as a CD-ROM or DVD (registered trademark)-ROM.

The encryption key K is provided by the video provision device 20 in response to a request from the camera device 10. A plurality of encryption keys K may be stored in the storage unit 14. The key identifier ID is an identifier that identifies an encryption key K stored in the storage unit 14. The key identifier ID is stored in the storage unit 14 in association with the encryption key K. For this reason, the same number of key identifier IDs as the number of encryption keys K stored in the storage unit 14 are stored. The video file F is a file that stores the digital video signal output from the camera 12 and the digital vocal sound signal output from the microphone 13, which have been encrypted using the encryption key K. The video file F is generated by the control unit 16, which is realized by the processor 18 executing the program P.

### <Video provision device>

The video provision device 20 is communicatively connected to the camera device 10 and the terminal device 30. The video provision device 20 provides the video transmitted from the camera device 10 to the terminal device 30 (external device). When a video file F is transmitted from the camera device 10, the video provision device 20 decodes the video file F and provides it to the terminal device 30. When a video or still image is transmitted from the camera device 10 in response to a video transmission instruction from the user of the camera device 10, the video provision device 20 provides the video or still image to the terminal device 30.

The video provision device 20 includes a communication unit 21, a storage unit 22, and a control unit 23. Under control of the control unit 23, the communication unit 21 communicates with the camera device 10 via the network N1 and with the terminal device 30 via the network N2. The communication unit 21 can also communicate with the camera device 10, for example, via the fixed Internet as well as via the network N1.

Under the control of the control unit 23, the storage unit 22 stores the video file F, still images, and videos transmitted from the camera device 10. The storage unit 22 stores the video file F decoded by the control unit 23. Hereinafter, the decoded video file F will be referred to as a "decoded video file." The storage unit 22 also stores a key required to decode the video file F, together with a key identifier ID that identifies the key. The storage unit 22 is realized by a storage device such as a memory, a hard disk drive (HDD), or a solid state drive (SSD).

The control unit 23 is connected to the communication unit 21 and the storage unit 22 and collectively controls operations of the video provision device 20. The control unit 23 stores still images and videos transmitted from the camera device 10 and the like in the storage unit 22. When the video file F is transmitted from the camera device 10, the control unit 23 decodes the video file F and stores it in the storage unit 22 as a decoded video file. The control unit 23 decodes the video file F using a key identified by a key identifier ID transmitted from the camera device 10 together with the video file F.

In response to a request from the terminal device 30, the control unit 23 controls the communication unit 21 so that a video of still images, moving images, and decoded video files stored in the storage unit 22 is output (provided) to the terminal device 30.

When there is a request for provision of an encryption key K from the camera device 10, the control unit 23 generates the encryption key K. Here, the encryption key K may be a common key or a public key. In consideration of security, it is preferable that the encryption key K generated by the control unit 23 be a public key. When the encryption key K is a public key, the control unit 23 generates a pair of encryption key K (first key), which is a public key used to encrypt a video, and a private key (second key) used to decode the video.

When the control unit 23 generates an encryption key K, it also generates a key identifier ID that identifies the encryption key K. The key identifier ID is an identifier that is uniquely determined for each encryption key K. Note that when an encryption key K (public key) and a private key are generated as a pair, the key identifier ID not only identifies the encryption key K (public key), but also identifies the private key corresponding to the encryption key K.

The control unit 23 controls the communication unit 21 to transmit the generated encryption key K to the camera device 10 that has requested the provision of the encryption key K. At this time, the control unit 23 transmits a key identifier ID that identifies the encryption key K together with the encryption key K. In addition, when the encryption key K is a common key, the control unit 23 stores the encryption key K together with the key identifier ID in the storage unit 22. When the encryption key K is a public key, the control unit 23 stores a private key corresponding to the encryption key K together with the key identifier ID in the storage unit 22. For ease of understanding, in the following description, it is assumed that the encryption key K transmitted to the camera device 10 is a public key, and that the private key corresponding to the encryption key K is stored in the storage unit 22 together with the key identifier ID.

When the encryption key K is provided to the camera device 10, the video provision device 20 performs authentication on the camera device 10 that has requested the provision of the encryption key K. This is to enhance security. Any known authentication method can be used to authenticate the camera device 10. When authentication is successful, the video provision device 20 transmits the generated encryption key K to the camera device 10 that has requested the provision of the encryption key K.

Functions of the video provision device 20 are realized when a program that realizes these functions is executed by hardware such as a CPU. In other words, the functions of the video provision device 20 are realized through the collaboration of software and hardware resources. The functions of the video provision device 20 are realized through the collaboration of software and hardware resources, and thereby it is extremely easy to update, delete, or add functions, for example.

While the functions of the video provision device 20 are desirably realized through the collaboration of software and hardware resources, the functions are not precluded from being realized using dedicated hardware. The functions of the video provision device 20 may also be realized using hardware such as an FPGA, LSI, or ASIC.

### <Terminal device>

The terminal device 30 is communicatively connected to the video provision device 20, receives various videos provided by the video provision device 20, and issues necessary instructions to the video provision device 20. The terminal device 30 may be, for example, a desktop, laptop, or tablet computer, a smartphone, or the like, and is used, for example, in a monitoring center.

The terminal device 30 includes a communication unit 31, an operation unit 32, a display unit 33, and a control unit 34. The communication unit 31 performs communication via the network N2 under control of the control unit 34. Specifically, the communication unit 31 communicates with the video provision device 20 via the network N2.

The operation unit 32 includes, for example, an input device such as a keyboard or a pointing device, and outputs an instruction (an instruction for the terminal device 30) to the control unit 34 in response to an operation of the user using the terminal device 30. The display unit 33 includes, for example, a display device such as an LCD display, and displays various types of information output from the control unit 34. The operation unit 32 and the display unit 33 may be physically separated, or may be physically integrated, such as a touch-panel LCD display that combines display and operation functions.

The display unit 33 may also display various videos on an external display. For example, the display unit 33 may display a composite image on a system (video wall) in which a plurality of displays are arranged to form a single screen.

The control unit 34 collectively controls operations of the terminal device 30 on the basis of operational instructions input from the operation unit 32. For example, the control unit 34 displays various videos provided by the video provision device 20 on the display unit 33 in response to the operational instructions input from the operation unit 32.

### <Operation of video provision system>

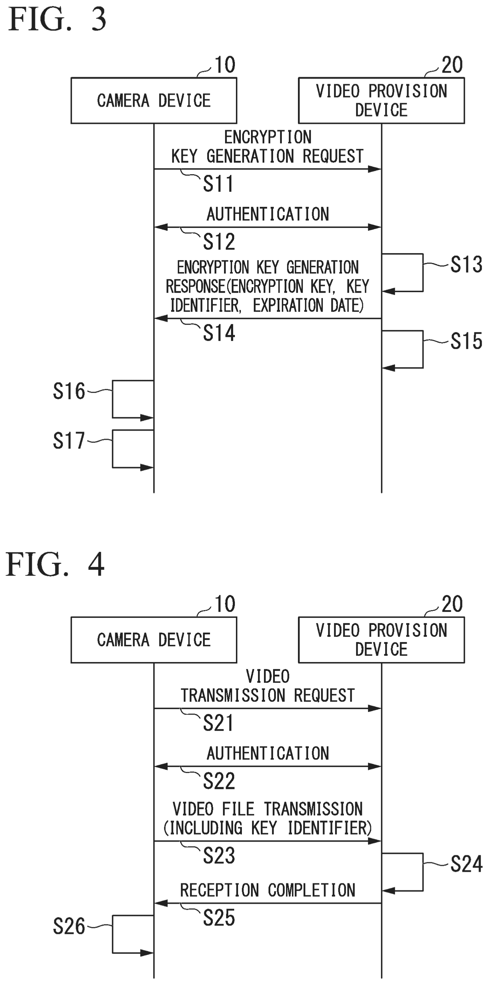

FIG. 3 is a timing chart which shows an example of an operation of a video provision system according to one embodiment of the present disclosure. The timing chart shown in FIG. 3 is executed prior to capturing of a video by the camera device 10. Processing of the timing chart shown in FIG. 3 may be started at any timing before the capturing of a video by the camera device 10. For example, it may be started at a timing when the camera device 10 is registered in the video provision device 20 as a camera device to be used in the video provision system 1, or when the camera device 10 is powered on.

When processing of the timing chart shown in FIG. 3 is started, the camera device 10 first transmits an encryption key generation request to the video provision device 20 (step S11). Specifically, the control unit 16 of the camera device 10 controls the communication unit 11 to transmit the encryption key generation request to the video provision device 20.

When the encryption key generation request transmitted from camera device 10 is received, video provision device 20 performs authentication on the camera device 10 (step S12). Specifically, the control unit 23 of the video provision device 20 controls communication unit 21 to exchange information necessary for authentication with the camera device 10 to perform authentication. Any known authentication method can be used to authenticate the camera device 10. When authentication of the camera device 10 fails, the timing chart shown in FIG. 3 ends.

In response to this, when the authentication of the camera device 10 is successful, the video provision device 20 generates an encryption key K (step S13). For example, the control unit 23 of the video provision device 20 generates a pair of the encryption key K, which is a public key used to encrypt a video, and a private key used to decode the video. The control unit 23 also generates a key identifier ID that identifies the generated encryption key K and the private key. In addition, the control unit 23 sets an expiration date for the generated encryption key K and the private key.

The encryption key K generated by the video provision device 20, the key identifier ID that identifies the encryption key K, and the expiration date are transmitted to the camera device 10 as an encryption key generation response (step S14). Specifically, the control unit 23 of the video provision device 20 controls the communication unit 21 to transmit the encryption key K, the key identifier ID, and the expiration date as the encryption key generation response to the camera device 10. The control unit 23 also stores the generated private key together with the key identifier ID in the storage unit 22 (step S15).

When the encryption key generation response transmitted from the video provision device 20 is received, the control unit 16 of the camera device 10 stores the encryption key K, the key identifier ID, and the expiration date included in the encryption key generation response in the storage unit 14 (step S16).

After the processing described above is completed, for example, if the user of the camera device 10 operates the operation unit 15 to instruct a start of capturing a video, the camera 12 starts capturing a video, a digital video signal is output from the camera 12, and a digital vocal sound signal is output from the microphone 13. The digital video signal output from the camera 12 and the digital vocal sound signal output from the microphone 13 are encrypted in the control unit 16 using the encryption key K stored in the storage unit 14, and stored in the storage unit 14 as a video file F (step S17).

When the video file F is stored in the storage unit 14, the control unit 16 stores a key identifier ID that identifies the encryption key K used for encryption together with a video file F in the storage unit 14. For example, when the video file F is stored in the storage unit 14, the control unit 16 stores the key identifier ID that identifies the encryption key K used for encryption in the header, thereby storing the key identifier ID together with the video file F in the storage unit 14.

FIG. 4 is a timing chart which shows another example of the operation of a video provision system according to an embodiment of the present disclosure. The timing chart shown in FIG. 4 is started, for example, when the communication unit 11 of the camera device 10 is communicatively connected to the video provision device 20 via a fixed Internet line via Wi-Fi (registered trademark).

When processing of the timing chart shown in FIG. 4 is started, a video transmission request is first transmitted from the camera device 10 to the video provision device 20 (step S21). This video transmission request is made by the control unit 16 of the camera device 10 requesting the video provision device 20 to transmit the video file F stored in the storage unit 14.

If the video transmission request transmitted from the camera device 10 is received, the video provision device 20 performs authentication on the camera device 10 (step S22). Specifically, the control unit 23 of the video provision device 20 controls the communication unit 21 to exchange information necessary for authentication with the camera device 10 to perform authentication. Any known authentication method can be used for authenticating the camera device 10. Note that the authentication method used herein may be the same as the authentication method used in step S12 shown in FIG. 3. If the authentication of the camera device 10 fails, the timing chart shown in FIG. 4 will end.

In contrast, if the authentication of the camera device 10 is successful, the video provision device 20 notifies the camera device 10 that the authentication has been successful. If this notification is received, the camera device 10 reads the video file F stored in the storage unit 14 and transmits it to the video provision device 20 (step S23). At this time, the control unit 16 of the camera device 10 also transmits, together with the video file F, information for identifying the encryption key K used to encrypt the video file F. Note that when a key identifier ID is stored in the header of the video file F, the key identifier ID is also transmitted when the video file F is transmitted.

The transmission of the video file F to the video provision device 20 may be performed for all video files F stored in the storage unit 14, or may be performed for only a portion of the video files F stored in the storage unit 14. For example, the transmission may also be performed for only one of the video files F stored in the storage unit 14, which has been selected by the user of the camera device 10.

If the video file transmitted from the camera device 10 is received, the video provision device 20 decodes the received video file F (step S24). For example, the control unit 23 of the video provision device 20 reads, from the storage unit 22, a private key identified by a key identifier ID included in a header of the received video file F, and uses this private key to decode the video file F. The control unit 23 stores the decoded video file F in the storage unit 22 as a decoded video file.

If the decoded video file has been completely stored, the video provision device 20 notifies the camera device 10 that reception is complete (step S25). This reception completion indicates that reception and decoding of the video file F transmitted from the camera device 10 has been completed. This reception completion may include a file name of the video file F that has been completely received and decoded.

If the reception completion notified from the video provision device 20 is received, the control unit 16 of the camera device 10 deletes the video file F stored in the storage unit 14 (step S26). For example, if the file name of the video file F is included in the reception completion, the control unit 16 deletes the video file F identified by that file name.

For example, when a video provision request is received from terminal device 30, the video provision device 20 reads the decoded video file identified in the video provision request from the decoded video files stored in the storage unit 22 and provides it to the terminal device 30. As a result, a video stored in the camera device 10 is provided to the terminal device 30 via the video provision device 20.

Note that FIG. 4 shows an example in which the video provision device 20 notifies the terminal device 30 that the reception is complete after decoding the video file F transmitted from the camera device 10. However, the video provision device 20 may notify the reception completion at a time when the video file F transmitted from the camera device 10 is received, and may then decode the video file F after notifying the reception completion. In other words, steps S24 and S25 may be reversed.

As described above, according to the embodiment of the present disclosure, the video provision system includes the camera device 10 that captures a video and the video provision device 20 that provides the video captured by the camera device 10 to an external device. The camera device 10 executes encrypting and storing the captured video using a key provided by the video provision device 20, and when it is communicatively connected to the video provision device 20, transmitting the stored video to the video provision device 20. The video provision device 20 decodes the video transmitted from the camera device 10 and provides it to the external device. As a result, it is possible to avoid a risk of a recorded video being viewed by a third party even if the camera device 10 is lost or stolen.

Furthermore, in this embodiment, after the camera device 10 transmits the stored video to the video provision device 20, if the video provision device 20 notifies it of completion of reception of the video or of an instruction to delete the video, the video transmitted to the video provision device 20 is deleted. As a result, it is possible to reduce the risk of other people viewing the video and also ensure capacity in the storage unit 14.

The video provision system, the video provision method, and the non-transitory computer readable storage medium according to embodiments of the present disclosure have been described above. However, the present disclosure is not limited to the embodiments described above and can be freely modified within a scope of the present disclosure. For example, the video provision device 20 described in the embodiments described above may be implemented as a server device or may also be implemented as a cloud computing system.

Furthermore, in the embodiments described above, an aspect in which the video provision device 20 provides video to the terminal device 30 via the network N2 has been described. However, for example, when the video provision device 20 is installed in a monitoring center, the video provision device 20 and the terminal device 30 may be integrated. In such a configuration, the video is displayed on a display device (a constituent equivalent to the display unit 33) connected to the video provision device 20.

## Claims

1. A video provision system comprising:
a camera device configured to capture a video; and
a video provision device configured to provide the video captured by the camera device to an external device,
wherein the camera device is configured to encrypt and store the captured video using a key provided by the video provision device, and transmit the stored video to the video provision device when the camera device is communicatively connected to the video provision device, and
wherein the video provision device is configured to decode the video transmitted from the camera device and provide the decoded video to the external device.

2. The video provision system according to claim 1,
wherein the video provision device is configured to:
generate a first key used to encrypt the video and a second key used to decode the video;
provide the first key to the camera device as the key; and
decode the video transmitted from the camera device using the second key.

3. The video provision system according to claim 1,
wherein the video provision device is configured to provide the key together with an identifier identifying the key to the camera device.

4. The video provision system according to claim 3,
wherein the camera device is configured to transmit the identifier for identifying the key used to encrypt the video to the video provision device together with the encrypted video.

5. The video provision system according to claim 4,
wherein the video provision device is configured to decode the video transmitted from the camera device using the key identified by the identifier transmitted together with the video.

6. The video provision system according to claim 1,
wherein the camera device is configured to request the video provision device to generate the key prior to capturing the video.

7. The video provision system according to claim 1,
wherein the camera device is configured to periodically request the video provision device to generate the key.

8. The video provision system according to claim 1,
wherein after the stored video is transmitted to the video provision device, the camera device is configured to delete the video transmitted to the video provision device when the video provision device notifies the camera device that reception of the video has been completed or that an instruction to delete the video has been received.

9. The video provision system according to claim 1,
wherein the camera device comprises:
a camera that captures the video;
a communication device that communicates with the video provision device; and
a processor connected to the camera and the communication device, and
wherein the processor is configured to encrypt the captured video using the key provided by the video provision device in accordance with a predetermined program.

10. The video provision system according to claim 1,
wherein the video provision device is configured to perform authentication on the camera device when the key is provided to the camera device, and provide the key to the camera device when the authentication is successful.

11. The video provision system according to claim 1,
wherein the video provision device comprises:
a memory storing a program; and
a processor configured to realize functions of the video provision device by executing the program.

12. A video provision method performed by a video provision system that comprises a camera device configured to capture a video and a video provision device configured to provide the video captured by the camera device to an external device, the video provision method comprising:
encrypting and storing, by the camera device, the captured video using a key provided by the video provision device;
transmitting, by the camera device, the stored video to the video provision device when the camera device is communicatively connected to the video provision device; and
decoding, by the video provision device, the video transmitted from the camera device and providing the decoded video to the external device.

13. A non-transitory computer readable storage medium that stores a program that causes a computer connected to a camera that captures a video and a communication device that communicates with an external device to:
encrypt and store the video captured by the camera using a key provided by the external device; and
control the communication device so that the stored video is transmitted to the external device when the computer is communicatively connected to the external device.
